# EUROPEAN PATENT SPECIFICATION

(11) **EP 1 619 059 B1**
(45) Date of publication and mention of the grant of the patent: **07.05.2014**
(21) Application number: 04103450.5
(22) Date of filing: 20.07.2004
(51) Int. Cl.: B60J 7/02

(54) **Slide shoe**
Gleitschuh
Patin coulissant

(43) Date of publication of application: 25.01.2006
(73) Proprietor: Inalfa Roof Systems Group B.V., 5804 AH Venray (NL)
(72) Inventor: Regan, Nicholas James, 3523 PN Utrecht (NL)
(74) Representative: Voncken, Bartholomeus Maria Ch.

(56) References cited:
- DE-A- 2 234 852
- US-A- 5 906 412
- US-B1- 6 364 406
- US-B1- 6 688 586
- US-B1- 6 739 648
- PATENT ABSTRACTS OF JAPAN vol. 1998, no. 11, 30 September 1998 (1998-09-30) -& JP 10 166866 A (OI SEISAKUSHO CO LTD), 23 June 1998 (1998-06-23)

## Description

The invention relates to a slide shoe, comprising two wall portions with slide surfaces facing outwardly in opposite directions, and further comprising internal biasing means for generating a bias which strives to move the two wall portions apart according to the preamble of claim 1.

Such a slide shoe for example is known from DE-A-2.234.852. This known slide shoe is internally provided with a spring member engaging a single leg striving to urge the two wall portions apart. With increasing wear of the slide surfaces the spring member will move the two wall portions further apart.

It is an object of the present invention to provide an improved slide shoe.

Thus, in accordance with the present invention, a slide shoe in accordance with the preamble of claim 1 is characterised in that two legs extend inwardly from the two wall portions in a corresponding manner, which legs have second ends hingeably connected to each other. Substantially, these two legs define a V-shaped connection (knee joint) between the two wall portions, with the hingeable connection between both legs positioned at the top of the V. In such an embodiment no internal friction will be caused when the legs move towards a position, in which the V is flattened, that means a position, in which the angle between both legs is increased.

With increasing wear of the slide surfaces of the slide shoe the two wall portions again will move further apart. This will lead to a rotation of the legs, resulting in a decrease of the spring load. However, because the legs rotate towards a position in which the angle between said legs and the corresponding wall portion is increased, the force created in the legs due to the spring load will have a component perpendicularly to the wall portion which has an increased proportion relative to the spring load. As a result, notwithstanding the decrease of the springload, the force acting to urge the two wall portions apart substantially will remain the same.

Preferably, spring means engage at least the second ends of said legs. For example, such spring means may comprise a compression spring of which the direction of operation substantially bisects the angle between both legs.

Although such a compression spring may comprise a helically extending spring, it is also possible that the spring means is a body of a resilient material, such as a rubber body engaging the legs. Such a rubber body then substantially may occupy the entire space between the opposite wall portions and the legs.

However, it is conceivable too that the spring means is a tension spring of which the direction of operation substantially bisects the angle between both legs.

It is noted, that also a combination of these possibilities may be provided.

Further, a special embodiment of the slide shoe is mentioned in which the legs are combined integrally into one leg extending curvilinearly. Such a combined configuration of the legs is especially preferably when the spring means is a body of a resilient material, as stated before.

When the slide shoe comprises two legs as stated before, it of course is possible too that more than one pair of such legs is provided. When, for example, two pairs of legs are provided, they may be positioned such, that a compression spring or tension spring extends therebetween acting on both pairs.

Hereinafter the invention will be elucidated while referring to the drawing, in which embodiments of the slide shoe and assembly according to the invention are illustrated.
Figure 1 shows, in a cross section and schematically, a first embodiment of a slide shoe according to the present invention;
figure 2 shows three alternative embodiments of a slide shoe according to the invention, and one embodiment not belonging to the invention;
figure 3 shows, schematically and perspectively, a first embodiment of a guide for housing and guiding a slide shoe, and
figure 4 shows, again schematically and perspectively, part of an alternative embodiment of such a guide.

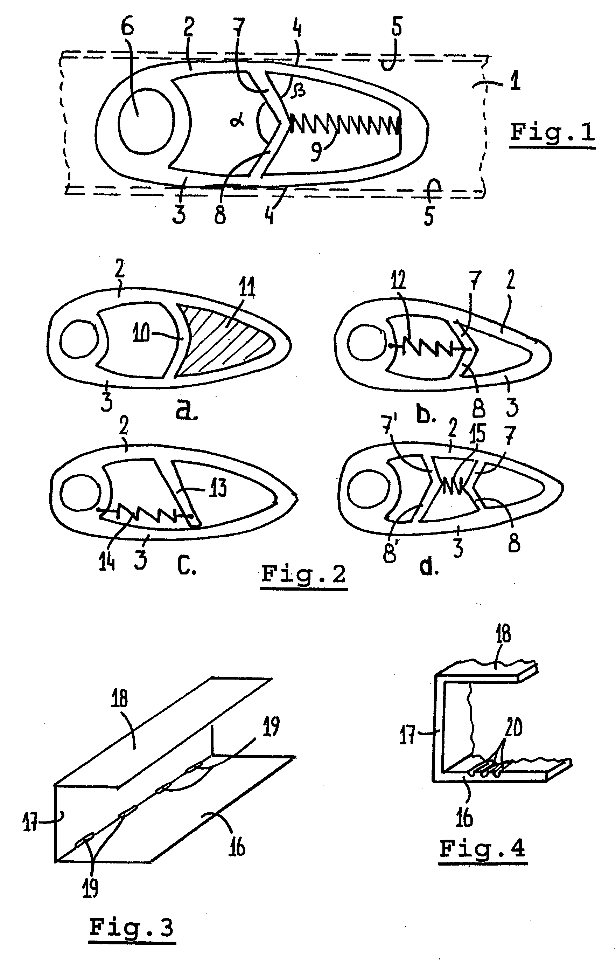

Firstly referring to figure 1, a slide shoe is illustrated which is meant for cooperation with a guide 1 (only illustrated schematically). The slide shoe comprises two wall portions 2 and 3 with slide surfaces 4 facing outwardly in opposite directions for a cooperation with guide surfaces 5 of the guide 1.

An opening 6 is provided using which the slide shoe may be mounted to an object.

Two legs 7 and 8 extend inclined inwardly from the wall portions 2 and 3. At first ends these legs 7 and 8 are hingeably connected to the inner side of the wall portions 2 and 3, respectively. "Hingeably" means, that the orientation of the legs 7, 8 relative to the corresponding wall portions 2, 3 may change. Although this may be realised with hinges, it is also possible that such a hingeability is obtained by choosing a proper material from which the legs 7, 8 are made of.

The opposite ends of the legs 7, 8 join each other, also in a hingeable manner.

A compression spring 9 is positioned inside the slide shoe and engages both legs 7 and 8 at their junction.

The compression force generated by the compression spring 9 tends to rotate the legs in such a manner, that the angle α comprised between the legs is increased. As a result, the wall portions 2 and 3 are urged outwardly such as to engage the guide surfaces 5 of the guide 1 firmly and with the desired friction. With an increasing wear of the wall portions 2, 3 (slide surfaces 4), the wall portions 2, 3 will move outwardly further, as a result of which the legs 7 and 8 will rotate further as described above, under influence of the compression spring 9. Although the force generated by the compression spring 9 will decrease because the compression spring 9 relaxes, the diminished inclination of the legs 7, 8 relative to the wall portions 2, 3 (this means that the legs 7, 8 move towards a position closer to a position perpendicularly to the wall portions 2, 3) the force generated perpendicularly to the wall portions substantially will remain unchanged. As a result the friction force generated between the slide surfaces 4 and guide surfaces 5 will remain constant (or nearly constant), also when the slide shoe experience wear.

The advantageous effect of the slide shoe according to the present invention basically is obtained because the inclination of the legs 7 and 8 will change relative to the wall portions 2, 3. At one hand, when the compression spring 9 relaxes the force generated thereby and thus the force generated in the longitudinal direction of the legs 7 and 8 will diminish. At the other hand, however, the component of such a longitudinal force perpendicularly to the wall portions 2 and 3 will be larger with increasing angle β between the legs 7, 8 and corresponding wall portions 2 and 3. In the ideal situation these two effects will compensate each other.

Figure 2 shows three alternative embodiments of a slide shoe in accordance with the present invention. It is noted, however, that many other embodiments are conceivable.

Figure 2a shows a slide shoe in which the legs connecting the wall portion 2, 3 have been combined integrally into one leg 10 extending curvilinearly. Further, the compression spring 9 has been substituted by a body 11 of a resilient material, such as for example a rubber body, which engages the combined legs 10.

Figure 2b shows an embodiment of a slide shoe which basically corresponds with the embodiment illustrated in figure 1, but now a tension spring 12 has been provided in stead of the compression spring 9.

In figure 2c an embodiment of a slide shoe not belonging to the invention is illustrated, in which only one leg 13 is provided which, in the present embodiment, is connected to wall portion 2, whereas its free end rides upon wall portion 3. As an internal biasing means a tension spring 14 is provided.

Figure 2d illustrates an embodiment with two pairs of legs 7, 8 and 7', 8', which have opposite orientations and between which a compression spring 15 has been positioned.

It is noted, that the compression spring 9 in the embodiment illustrated in figure 1 (as well as the tension spring 12 in the embodiment according to figure 2b and compression spring 15 in the embodiment according to figure 2d) all are positioned such, that the direction of operation thereof substantially bisects the angle between the legs 7, 8 (7',8'). In such a manner these springs operate in the most effective manner. However, also when the direction of operation does not bisect the angle between both legs of a pair, the slide shoe basically will function in the manner as desired by the present invention.

Further it is noted, that in the illustrated embodiments the spring members engage the legs at their junction. This is, however, not strictly necessary.

Referring to figure 3, a first embodiment of a guide for housing and guiding a slide shoe is illustrated. Said guide comprises guide surfaces 16, 17 and 18 for cooperation with the slide shoe. At the junction of guide surfaces 16 and 17 a number of spaced apart passages 19 is provided which will function as removal means for removing dust from the guide.

Alternatively, as illustrated in figure 4, one of the guide surfaces (for example guide surface 16) comprises a number of grooves 20 extending longitudinally therein alongside each other. These grooves 20 also are meant for removing dust from the guide.

The invention is not limited to the embodiments described before which may be varied widely within the scope of the invention as defined by the appending claims.

## Claims

1. Slide shoe, comprising two wall portions (2, 3) with slide surfaces (4) facing outwardly in opposite directions, and further comprising internal biasing means for generating a bias which strives to move the two wall portions apart, wherein the biasing means comprises at least one leg (7), which leg with a first end is hingeably connected to the inner side of one of said two wall portions (2, 3) and extends inclined inwardly therefrom and which is engaded by spring means (9, 11, 12, 15) such that a spring load is generated striving to rotate the leg such that the angle (β) between said leg and the corresponding wall portion (2, 3) is increased, **characterised in that** the biasing means further comprises another leg (8) wherein the two legs (7, 8) extend inwardly from the two wall portions (2, 3) in a corresponding manner, which legs have second ends hingeably connected to each other.

2. Slide shoe according to claim 1, wherein the spring means (9, 11, 12, 14, 15) engage at least the second ends of said legs.

3. Slide shoe according to claim 2, wherein the spring means is a compression spring (9, 11, 15) of which the direction of operation substantially bisects the angle between both legs.

4. Slide shoe according to claim 3, wherein the spring means is a body (11) of a resilient material, such as a rubber body engaging the legs.

5. Slide shoe according to claim 2, wherein the spring means is a tension spring (12, 14) of which the direction of operation substantially bisects the angle between both legs (7, 8).

6. Slide shoe, according to any of the claims 1-5, wherein the legs are combined integrally into one leg (10) extending curvilinearly.

## Patentansprüche

1. Gleitschuh, welcher zwei Wandabschnitte (2, 3) mit Gleitflächen (4) aufweist, welche in entgegengesetzte Richtungen nach außen gerichtet sind, und welcher weiter ein inneres Vorspannmittel zum Erzeugen einer Vorspannung aufweist, welche anstrebt, die zwei Wandabschnitte auseinander zu bewegen, wobei das Vorspannmittel zumindest einen Schenkel (7) aufweist, welcher Schenkel mit einem ersten Ende gelenkig mit der Innenseite von einem der zwei besagten Wandabschnitte (2, 3) verbunden ist und sich davon schräg nach innen erstreckt und welcher mit einem Federmittel (9, 11, 12, 14) im Eingriff ist, so dass eine Federbelastung erzeugt wird, welche anstrebt, den Schenkel zu drehen, so dass der Winkel (β) zwischen dem besagten Schenkel und dem korrespondierenden Wandabschnitt (2, 3) erhöht wird, **dadurch gekennzeichnet, dass** das Vorspannmittel weiter einen anderen Schenkel (8) aufweist, wobei sich die zwei Schenkel (7, 8) ausgehend von den zwei Wandabschnitten (2, 3) in einer korrespondierenden Weise nach innen erstrecken, welche Schenkel zweite Enden haben, die gelenkig miteinander verbunden sind.

2. Gleitschuh gemäß Anspruch 1, wobei das Federmittel (9, 11, 12, 14, 15) zumindest die zweiten Enden der besagten Schenkel erfasst.

3. Gleitschuh gemäß Anspruch 2, wobei das Federmittel eine Druckfeder (9, 11, 15) ist, von welcher die Betätigungsrichtung im Wesentlichen den Winkel zwischen beiden Schenkeln halbiert.

4. Gleitschuh gemäß Anspruch 3, wobei das Federmittel ein Körper (11) aus einem federnden Material ist, wie zum Beispiel ein Gummikörper, welcher mit den Schenkeln im Eingriff ist.

5. Gleitschuh gemäß Anspruch 2, wobei das Federmittel eine Zugfeder (12, 14) ist, von welcher die Betätigungsrichtung im Wesentlichen den Winkel zwischen beiden Schenkeln halbiert (7, 8).

6. Gleitschuh gemäß irgendeinem der Ansprüche 1-5, wobei die Schenkel integral in einem Schenkel (10) kombiniert sind, welcher sich gekrümmt erstreckt.

## Revendications

1. Patin glissant, comprenant deux parties parois (2, 3) avec des surfaces glissantes (4) orientées vers l'extérieur dans des directions opposées, et comprenant en outre un moyen de sollicitation interne pour générer une sollicitation qui s'efforce d'écarter les deux parties parois, dans lequel le moyen de sollicitation comprend au moins un segment (7), lequel segment, avec une première extrémité, est raccordé, de façon articulée, au côté intérieur d'une desdites deux parties parois (2, 3) et s'étend de façon inclinée vers l'intérieur à partir de celle-ci et avec lequel un moyen ressort (9, 11, 12, 15) entre en prise de sorte qu'une charge de ressort soit générée s'efforçant de faire tourner le segment de sorte que l'angle (β) entre ledit segment et la partie paroi correspondante (2, 3) soit augmenté, **caractérisé en ce que** le moyen de sollicitation comprend en outre un autre segment (8), dans lequel les deux segments (7, 8) s'étendent vers l'intérieur à partir des deux parties parois (2, 3) de manière correspondante, lesquels segments comportent des secondes extrémités raccordées, de façon articulée, l'une à l'autre.

2. Patin glissant selon la revendication 1, dans lequel le moyen ressort (9, 11, 12, 14, 15) entre en prise avec au moins avec les secondes extrémités desdits segments.

3. Patin glissant selon la revendication 2, dans lequel le moyen ressort est un ressort de compression (9, 11, 15) dont la direction de fonctionnement coupe sensiblement en deux l'angle entre les deux segments.

4. Patin glissant selon la revendication 3, dans lequel le moyen ressort est un corps (11) d'un matériau résilient, tel qu'un corps en caoutchouc entrant en prise avec les segments.

5. Patin glissant selon la revendication 2, dans lequel le moyen ressort est un ressort de tension (12, 14) dont la direction de fonctionnement coupe sensiblement en deux l'angle entre les deux segments (7, 8).

6. Patin glissant selon l'une quelconque des revendications 1 à 5, dans lequel les segments sont combinés d'un seul tenant en un segment (10) s'étendant de façon curviligne.
